# EUROPÄISCHE PATENTSCHRIFT

(11) **EP 0 539 798 B1**
(45) Veröffentlichungstag und Bekanntmachung des Hinweises auf die Patenterteilung: **04.06.1997**
(21) Anmeldenummer: 92117545.1
(22) Anmeldetag: 14.10.1992
(51) Int. Cl.: H04M 1/02

(54) **Gerätefuss für Fernsprechgeräte**
Support foot for telephone apparatus
Pied d'embase pour postes téléphoniques

(30) Priorität: 30.10.1991 DE 4135792
(43) Veröffentlichungstag der Anmeldung: 05.05.1993
(73) Patentinhaber: SIEMENS AKTIENGESELLSCHAFT, 80333 München (DE)
(72) Erfinder: Höpken, Reiner, Dipl.-Ing., W-4230 Wesel (DE); Reuschel, Jürgen, W-4290 Bocholt (DE)

(56) Entgegenhaltungen:
- DE-A- 1 955 497
- DE-A- 3 102 218
- DE-B- 1 136 378

## Beschreibung

Die vorliegende Erfindung beinhaltet einen Gerätefuß für Fernsprechgeräte in Form eines elastischen einstückigen Körpers, der im wesentlichen aus einem innerhalb einer Ausnehmung des Fernsprechgerätes formschlüssig befestigten Bereich und einem Standbereich besteht.

Ein derartiger Gerätefuß ist durch die DE-C- 3 102 218 bekannt. Bei diesem Gerätefuß bestand das Problem, einen optimalen Reibungswiderstand zwischen dem Fernsprechgerät und der Standfläche des Gerätes zu erreichen, um einen rutschfesten Stand des Gerätes zu gewährleisten. Zu diesem Zweck wurde der Anlagebereich der gewölbten Standfläche des Gummifußes in bezug auf die Standfläche so gestaltet, daß er in seinem Standbereich von einer ringförmigen Nut umgeben und somit rechtwinklig zur Achse des Gerätefußes bewegbar war. Derartige Gerätefüße wurden mittels eines speziellen Einziehwerkzeuges an der Fernsprechstation befestigt.

In neuerer Zeit sind aus elastischem Material bestehende Gerätefüße DE-A- 40 18 410 bekanntgeworden, die scheibenförmig gestaltet sind und rotationssymmetrisch gleiche, von seinem Randbereich begrenzte Ausnehmungen besitzen. Im Bodenbereich des Fernsprechgerätes ist eine dem Randbereich des Gerätefußes konturmäßig angepaßte Aussparung mit einem Mittelbereich vorgesehen. Die Verbindung von Gerätefuß und Aussparung in Bodenbereich des Fernsprechgerätes erfolgt mittels eines zwischen dem Mittelbereich der Aussparung und einer der Ausnehmungen des Gummifußes eingebrachten Schnellklebers.

Da üblicherweise vier derartige Gerätefüße im Bodenbereich des Fernsprechgerätes angebracht werden, besteht bei der letztgenannten Ausbildung und Anbringung des jeweiligen Gerätefußes aufgrund fertigungsbedingter Höhentoleranzen bei der Herstellung des Fernsprechgerätes im Spritzverfahren sowie durch Verzug des Gerätes bei dessen Endmontage das Problem, daß das Gerät in Bezug auf seine Standfläche eine instabile Lage einnimmt, d. h. das Fernsprechgerät neigt zum Kippeln. Bedingt durch das mittels Fertigungsautomaten erfolgende Aufsetzen der Gerätefüße und das Aufbringen des Klebers haben sich weitere Probleme ergeben. Zum einen waren die Gerätefüße häufig ungenau bezüglich der Aussparung im Bodenbereich des Fernsprechgerätes positioniert und anschließend befestigt worden und zum anderen wurden sie durch überschüssiges, auch in den Randbereich verlaufendes Klebemittel einseitig befestigt. Durch die letztgenannten Fertigungsfehler war selbst ein geringer Höhenausgleich nicht mehr möglich.

Der vorliegenden Erfindung liegt daher die Aufgabe zugrunde, einen Gerätefuß aufzuzeigen, der eine einfache formschlüssige Verbindung mit dem Bodenbereich eines Fernsprechgerätes ohne Zuhilfenahme von speziellen Werkzeugen gestattet und der zum anderen die durch die Herstellung und den Zusammenbau des Fernsprechgerätes sowie das Anbringen der Gerätefüße bedingten Höhentoleranzen auszugleichen vermag.

Diese Aufgabe wird dadurch gelöst, daß der Befestigungsbereich zylinderförmig gestaltet ist und in seinem freien Endbereich eine kegelförmig auslaufende Verdickung besitzt und der sich daran anschließende Standbereich durch zumindest zwei über zur Standfläche axial verlaufende Einschnürungen mit einem Mittelbereich verbundene Auflagebereiche gebildet ist, wobei die Auflagebereiche in Bezug auf die Standfläche eine größere Materialstärke besitzen als der Mittelbereich.

Ein derartiger Gerätefuß kann aufgrund der kegelförmigen Gestaltung seines Befestigungsbereiches auch mittels eines Fertigungsautomaten in die entsprechende Ausnehmung im Bodenbereich des Fernsprechgerätes eingedrückt werden, so daß die oben erwähnten Fertigungsfehler durch überschüssiges Klebemittel sowie ungenaues Positionieren der Gerätefüße nicht mehr auftreten. Bei dieser Ausbildung des Befestigungsbereiches erfolgt zwangsläufig eine zentrierte Aufnahme des Gerätefußes in der Ausnehmung im Bodenbereich des Fernsprechgerätes. Durch Anordnung von zumindest zwei sich über zur Standfläche axial verlaufende Einschnürungen mit einem Mittelbereich des Standbereichs verbundene Auflagebereiche läßt sich die Elastizität des Gerätefußes um eine in Richtung der Standfläche verlaufende Achse erheblich verbessern, so daß die durch die Fertigung und Montage bedingten Höhentoleranzen federnd ausgeglichen werden können.

Dabei können die Auflagebereiche größtenteils innerhalb einer Ausnehmung im Gerätegehäuse des Fernsprechgerätes angeordnet sein, wobei die Ausnehmung einen größeren Durchmesser aufweist als der Standbereich und zum Gehäuseinneren des Fernsprechgerätes eine Aushöhlung besitzt. Aufgrund der zum Gehäuseinneren vorgesehenen Aushöhlung der Ausnehmung ist ein weiterer Raum geschaffen worden, in den der jeweilige elastisch gestaltete Auflagebereich des Gerätefußes auszuweichen vermag. Eine formschlüssige Verbindung zwischen dem Gerätefuß und der Bodenwanne des Fernsprechgerätes läßt sich in einfacher Weise dadurch realisieren, daß ein innerhalb der Ausnehmung des Bodenbereiches hineinragender Vorsprung vorgesehen ist, an dem die Verdickung des Befestigungsbereiches und der Mittelbereich des Gerätefußes unter Vorspannung zur Anlage gelangt.

Die Erfindung soll im folgenden anhand eines Ausführungsbeispiels näher erläutert werden.

Es zeigt
Figur 1 den Gerätefuß in einer geschnittenen Seitenansicht,
Figur 2 den Gerätefuß in einer Ansicht von unten (Pfeilrichtung II in Figur 1),
Figur 3 den in einer Bodenwanne einer Fernsprechstation eingebrachten Gerätefuß in einer geschnittenen Seitenansicht.

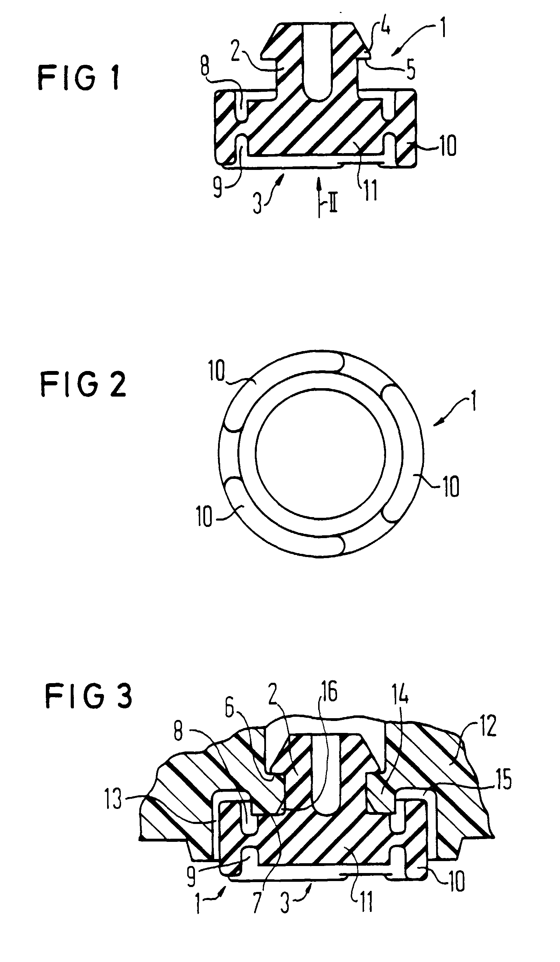

Der in Figur 1 und 2 dargestellte Gerätefuß 1 besteht vorzugsweise aus einem elastischen Material, z. B. Gummi, und soll dazu dienen, bei Geräten z. B. Fernsprechgeräten eine rutschsichere Auflage auf einer Standfläche zu erreichen.

Der Gerätefuß 1 besteht im wesentlichen aus einem in das Gerätegehäuse einbringbaren und mit dem Gerätehäuse eine Verbindung eingehenden Befestigungsbereich 2 sowie dem Standbereich 3. Der Befestigungsbereich 2 ist zylinderförmig gestaltet und weist an seinem freien Endbereich eine kegelförmig gestaltete, umlaufende Verdickung 4 auf. Die Schulter 5 dieser Verdickung 4 sowie ein Teil des sich an den zylinderförmigen Befestigungsbereich 2 anschließenden Standbereiches 3 gelangen im montierten Zustand des Gerätefußes unter leichter Vorspannung an diesen Konturen angepaßten Gehäuseteilen 6 und 7 (Figur 3) zur Anlage. Der Standbereich 3 ist im wesentlichen scheibenförmig gestaltet und besitzt in seinem freien Endbereich jeweils durch Einschnürungen 8 und 9 gebildete Auflagebereiche 10. Die Auflagebereiche 10 weisen eine größere Materialstärke auf als der Mittelbereich 11 des Auflagebereiches 3.

Wie der Figur 3 zu entnehmen ist, weist das Gerätegehäuse 12 in seinem Bodenbereich eine den Konturen des Gerätefußes 1 entsprechende Ausnehmung 13 sowie einen an den zylinderförmigen Teil des Befestigungsbereiches 2 angepaßten umlaufenden Vorsprung 14 auf. Dabei ist die Ausnehmung 13 bezüglich ihres Durchmessers größer gehalten als der Standbereich 3 und weist in ihrem der Standfläche des Gerätegehäuses 12 abgewandten Bereich eine Aushöhlung 15 auf, während der Vorsprung 14 direkt an dem zylinderförmigen Teil des Befestigungsbereiches zur Anlage gelangt. Der Vorsprung 14 weist weiterhin in Befestigungsrichtung des Gerätefußes 1 eine Anfasung 16 auf.

Die Befestigung des Gerätefußes 1 an dem Gerätegehäuse erfolgt durch Eindrücken des Befestigungsbereiches 2 in das Gerätegehäuse. Dieser Vorgang wird durch die Anfasung 16 am Vorsprung 14 und durch die kegelförmig gestaltete Verdickung 4 im Befestigungsbereich 2 erleichtert. Im eingedrückten Zustand des Gerätefußes 1 gelangen der in der Bildebene unten liegende Teil der Verdickung 4 an dem oben liegenden Abschnitt 6 des Vorsprungs 14 sowie der oben in der Bildebene befindliche Abschnitt des Mittelbereiches 11 an dem unten liegenden 7 des Vorsprungs 14 unter Vorspannung zur Anlage, sodaß eine sichere formschlüssige und zentrierte Verbindung zwischen dem Gerätegehäuse und dem Befestigungsbereich 2 des Gerätefußes 1 erreicht wird. Die über die Einschnürungen 8 und 9 gebildeten und einstückig mit dem Mittelbereich 11 verbundenen Auflagebereiche 10 können nun federnd Höhentoleranzen aufgrund der Dimensionierung der Ausnehmung 13 am Gerätegehäuse 12 ausgleichen, so daß auch bei ungenauer Fertigung des Gerätegehäuses stets eine sichere Auflage des Gerätes erreicht wird.

## Patentansprüche

1. Gerätefuß (1) für Fernsprechgeräte in Form eines elastischen, einstückigen Körpers, der im wesentlichen aus einem innerhalb einer Ausnehmung (13) des Fernsprechgerätes formschlüssig befestigten Bereich (2) und einem Standbereich (3) besteht,
**dadurch gekennzeichnet,** daß der Befestigungsbereich (2) zylinderförmig gestaltet ist und in seinem freien Endbereich eine kegelförmig auslaufende Verdickung (4) besitzt und der sich daran anschließende Standbereich (3) durch zumindest zwei über zur Standfläche axial verlaufende Einschnürungen (8, 9) mit einem Mittelbereich (11) verbundene Auflagebereiche (10) gebildet ist, wobei die Auflagebereiche (10) in Bezug auf die Standfläche eine größere Materialstärke besitzen als der Mittelbereich (11).

2. Gerätefuß nach Anspruch 1,
**dadurch gekennzeichnet,** daß die Auflagebereiche (10) größtenteils innerhalb einer Ausnehmung (13) im Gerätegehäuse (12) des Fernsprechgerätes angeordnet sind, wobei die Ausnehmung (13) einen größeren Durchmesser aufweist als der Standbereich (3) und zum Gehäuseinneren des Fernsprechgerätes eine Aushöhlung (15) besitzt.

3. Gerätefuß nach Anspruch 1,
**dadurch gekennzeichnet,** daß die formschlüssige Verbindung zwischen dem Befestigungsbereich (2) des Gerätefußes (1) und dem Fernsprechgerät durch einen in die Ausnehmung (13) am Fernsprechgerät hineinragenden und an der Verdickung (4) und dem Mittelbereich (11) des Gerätefußes (1) unter Vorspannung zur Anlage gelangenden Vorsprung (14) zustandekommt.

## Claims

1. Device foot (1) for telephone apparatus in the form of an elastic one-piece body which essentially comprises a portion (2) which is positively fastened within a recess (13) in the telephone apparatus, and a standing portion (3), characterized in that the fastening portion (2) is of cylindrical shape and has at its free end portion a thickening (4) which runs out in a cone shape, and the stand portion (3) adjacent thereto is formed by at least two support portions (10) which are connected to a central portion (11) via constrictions (8, 9) running axially with respect to the stand area, the support portions (10) having, in relation to the stand area, a greater material thickness than the central portion (11).

2. Device foot according to Claim 1, characterized in that the support portions (10) are for the most part arranged within a recess (13) in the device housing (12) of the telephone apparatus, the recess (13) having a larger diameter than the stand portion (3) and having a hollowing-out (15) towards the interior of the housing of the telephone apparatus.

3. Device foot according to Claim 1, characterized in that the positive connection between the fastening portion (2) of the device foot (1) and the telephone apparatus is achieved by means of a projection (14) which projects into the recess (13) in the telephone apparatus and comes into contact under prestress with the thickening (4) and the central portion (11) of the device foot (1).

## Revendications

1. Pied d'embase (1) pour postes téléphoniques sous forme d'un corps élastique d'une seule pièce qui se compose essentiellement d'une zone (2) assemblée par engagement à blocage dans un creux (13) du poste téléphonique et d'une zone de support (3)
**caractérisé par** le fait que la zone de fixation (2) a une forme cylindrique et comporte, à son extrémité libre, un gonflement (4) se terminant en forme de cône et que la zone de support (3) qui la prolonge est formée d'au moins deux zones d'appui (10) reliées à une zone centrale (11) par l'intermédiaire de rétrécissements (8, 9) qui s'étirent dans le sens axial vers la surface de repos, l'épaisseur du matériau des zones d'appui (10) étant, par rapport à la surface de repos, plus importante que celle de la zone centrale (11).

2. Pied d'embase conforme à la revendication 1
**caractérisé par** le fait que les zones d'appui (10) sont, en grande partie, placées à l'intérieur d'un creux (13) dans le coffret (12) du poste téléphonique, le creux (13) ayant un diamètre plus important que la zone de support (3) et comportant une cavité (15) vers l'intérieur du poste téléphonique.

3. Pied d'embase conforme à la revendication 1
**caractérisé par** le fait que la liaison par engagement à blocage entre la zone de fixation (2) du pied d'embase (1) et le poste téléphonique s'établit grâce à une cavité (13) qui s'étend vers l'intérieur du poste téléphonique et à un rebord (14) qui appuie en contrainte sur le gonflement (4) et la zone centrale (11) du pied d'embase (1).
